# EUROPEAN PATENT APPLICATION

(11) **EP 3 291 166 A1**
(43) Date of publication of application: **07.03.2018**
(21) Application number: 15890724.6
(22) Date of filing: 28.04.2015
(51) Int. Cl.: G06Q 50/08, G06Q 50/10

(54) **COMPONENT INFORMATION MANAGEMENT SYSTEM**

(71) Applicant: Komatsu Ltd., Minato-ku Tokyo 107-8414 (JP)
(72) Inventor: KOSHI Takayuki, Hiratsuka-shi Kanagawa 254-8555 (JP)
(74) Representative: Grünecker Patent- und Rechtsanwälte PartG mbB
(86) International application number: PCT/JP2015/062824
(87) International publication number: WO 2016/174740

(57) **Abstract**

A parts information management system (100) includes: an identification device (30) storing parts information for identifying an attached target part; a communication device (15) acquiring parts information included in an electric wave outputted by the identification device (30) and measuring a received strength of the electric wave: and a management apparatus (111) managing the parts information acquired by the communication device (15). The management apparatus (111) includes an installation position judgment unit (1117) that judges whether or not the target part identified by the parts information associated with the received strength is provided at a predetermined installation position based on the received strength, and a notification unit (1123) that outputs malfunction information when it is judged that the target part is not provided at the installation position.

## Description

### TECHNICAL FIELD

The present invention relates to a parts information management system. For instance, the present invention relates to a parts information management system for managing parts information for identifying a part of a working vehicle.

### BACKGROUND ART

A construction machine (e.g., a hydraulic excavator and a wheel loader), a delivery vehicle (e.g., a dump truck) and the like are typically known as a working vehicle. It is known in the art that an IC chip (identification part) is attached to a replacement part (e.g., a filter) installed in such a working vehicle and information stored in the IC chip is acquired using a sensor to replace the replacement part (see, for instance, Patent Literature 1).

In a replacement parts identification device disclosed in Patent Literature 1, the IC chip (identification part) is embedded in a genuine replacement part warranted by a manufacturer of a construction machine and a reader (sensor) is positioned so as to detect needed information stored in the IC chip. When a malfunction detection signal to be outputted when the needed information is not detected is outputted from the sensor, a controller stops an operation of an engine and/or displays an alarm message and the like on a monitor.

When a signal indicating replacement by another genuine filter is outputted from the sensor, the controller stores an attachment timing of the filter and calculates a next replacement timing to notify an operator of the replacement timing. Further, the controller stores presence or absence of the replacement of the genuine filter and the number of times of the replacement.

### CITATION LIST

### PATENT LITERATURE(S)

Patent Literature 1: JP-2005-273196 A

### SUMMARY OF THE INVENTION

### PROBLEM(S) TO BE SOLVED BY THE INVENTION

In the arrangement disclosed in Patent Literature 1, when an imitation attached with no identification device is provided at the installation position at which the genuine product is supposed to be attached, the needed information cannot be acquired from the imitation. Accordingly, it can be judged whether the part provided at the installation position is a genuine product or an imitation by judging whether or not the needed information has been acquired.

However, when the imitation is provided at the installation position and a genuine product is provided near the installation position and within a communication range of the reader, the reader may sometimes acquire the needed information from the genuine product. In this case, it may be incorrectly recognized that a genuine product is provided at the installation position, thus failing to properly manage the parts.

An object of the invention is to provide a parts information management system which is capable of recognizing an installation state of the parts.

### MEANS FOR SOLVING THE PROBLEM(S)

A parts information management system according to a first aspect of the invention includes: an identification device configured to store parts information for identifying a target part to which the identification device is attached; a communication device configured to acquire the parts information comprised in an electric wave outputted by the identification device and to measure a received strength of the electric wave; and a management apparatus configured to manage the parts information acquired by the communication device. The management apparatus includes: an installation position judgment unit configured to judge based on the received strength whether or not the target part identified by the parts information associated with the received strength is provided at a predetermined installation position; and a notification unit configured to output malfunction information when it is judged by the installation position judgment unit that the target part is not provided at the installation position.

It should be noted that examples of the identification device include an RFID (Radio Frequency Identification) tag that outputs the electric wave including the parts information. Examples of the communication device include a reader or a reader/writer that receives and demodulates the electric wave outputted by the RFID tag to acquire the parts information.

Examples of the contents of the malfunction information include information indicating that the target part identified by the acquired parts information is not provided at the predetermined installation position. Further, the notification unit may exemplarily output the malfunction information by, for instance, displaying the contents of the malfunction information on a monitor, and/or outputting the contents of the malfunction information using a speaker.

Further, the received strength may be RSSI (Received Signal Strength Indicator).

The received strength of the electric wave outputted by the identification device changes depending on the distance between the identification device and the communication device. For instance, the received strength becomes lower as the distance becomes longer and the received strength becomes higher as the distance becomes shorter. In other words, when the communication device is located at the same position, the received strength measured by the communication device changes in response to a change in the position of the identification device. Accordingly, whether or not the position of the identification device or, consequently, the target part on which the identification device is attached is different from the installation position can be judged based on the change in the received strength.

In view of the above, in the first aspect of the invention, whether or not the identification device storing the parts information or, consequently, the target part (target part identified by the parts information) on which the identification device is attached is provided at the predetermined installation position is judged by the installation position judgment unit based on the received strength measured by the communication device. When it is judged that the identification device is not provided at the installation position, the notification unit outputs the malfunction information. According to the above arrangement, whether or not the target part is provided at the installation position can be judged and, when the target part is not provided at the installation position (i.e. provided at a position different from the installation position), the malfunction information can be reliably outputted. Accordingly, the installation state of the target part can be appropriately recognized by the administrator of the management apparatus.

It is preferable in the parts information management system according to the first aspect of the invention that the parts information includes type information indicating a type of the target part, the management apparatus includes a storage unit configured to store pieces of the parts information and the received strength previously acquired and measured by the communication device in association with each other for each of pieces of the type information, and the installation position judgment unit is configured to judge that the target part is not provided at the installation position when parts information of the same type having the same type information as the acquired parts information acquired by the communication device is stored and a difference between the received strength associated with the acquired parts information and a received strength stored in association with the parts information of the same type exceeds a predetermined value.

According to the above arrangement of the first aspect of the invention, the installation position judgment unit judges whether or not the difference between the received strength associated with the acquired parts information and the received strength measured when the parts information of the same type, which has the same type information as the acquired parts information, is acquired in the past exceeds the predetermined value, thereby judging whether or not the target part is provided at the installation position. According to the above arrangement, since the comparison between the newly measured received strength and the received strength measured when the target part is provided at the installation position can be made, the installation state of the target part can be more appropriately recognized. Further, when it is judged that the target part in a form of the genuine product is not provided at the installation position, it is likely that an imitation (i.e. a target part of the same type as the genuine product but attached with no identification device) is provided at the installation position. Accordingly, in this case, the information indicating that an imitation may be provided can be outputted by the notification unit.

Further, the judgment on the difference between the newly measured received strength and the received strength measured in the past is made by the installation position judgment unit for each of the type information included in the parts information. Accordingly, even when different pieces of the parts information with different type information are acquired from the identification devices of the target parts by the communication device under the presence of a plurality of target parts of different types, the difference between the received strength associated with each of the pieces of the parts information and the received strength measured in the past can be appropriately judged. Accordingly, even when a plurality of target parts of different types are present, the installation state of each of the target parts can be appropriately recognized.

It should be noted that the received strength of the electric waves temporarily changes due to the environmental factor. Accordingly, when the predetermined value is set in consideration of the temporary change in the received strength due to the environmental factor, whether or not the target part is provided at a position different from the installation position can be reliably and appropriately determined irrespective of the temporary change due to the above environmental factor. Accordingly, the installation state of the target part can be appropriately recognized.

It is preferable in the parts information management system according to the first aspect of the invention that the parts information management system further includes: an information contents judgment unit configured to judge, when it is judged by the installation position judgment unit that the target part is provided at the installation position, whether or not contents of the acquired parts information are the same as contents of the parts information of the same type; and an update unit configured to, when it is judged by the information contents judgment unit that the contents of the acquired parts information are not the same as the contents of the parts information of the same type, store the acquired parts information and the received strength associated with the acquired parts information in the storage unit to update stored contents in the storage unit.

According to the above arrangement in the first aspect of the invention, when the installation position judgment unit judges that the target part is provided at the predetermined installation position, the information contents judgment unit judges whether or not the contents of the acquired parts information are the same as the contents of the corresponding parts information of the same type. When it is judged that the contents of the acquired parts information are not the same as the contents of the parts information of the same type, it is judged that a new target part is provided at the installation position and the update unit stores the parts information of the new target part (acquired parts information) in the storage unit. According to the above arrangement, the parts information of the latest target part provided at the installation position can be kept in record. Thus, the part information can be appropriately managed.

It is preferable in the parts information management system according to the first aspect of the invention that the parts information management system further includes: a working vehicle including the identification device, the communication device, and a transmitter configured to associate the parts information with the received strength acquired and measured by the communication device and transmit the parts information associated with the received strength; a management center including the management apparatus; and a communication network configured to connect the working vehicle and the management center in a manner capable of wireless communication.

With the above arrangement in the first aspect of the invention, the parts information of the target part installed in the working vehicle and the received strength associated with the parts information can be managed by the management center remote from the working vehicle via the communication network. Accordingly, the installation state of the target part of the working vehicle can be recognized at the management center.

A parts information management system according to a second aspect of the invention includes: a working vehicle; a management apparatus; and a communication network configured to wirelessly connect the working vehicle and the management apparatus, in which the working vehicle includes: an identification device including at least one identification part attached to target parts of the same type and storing parts information for identifying each of the target parts; a communication device configured to acquire the parts information included in an electric wave outputted by the at least one identification part and to measure a received strength of the electric wave; and a transmitter configured to transmit acquisition information including the parts information and the received strength acquired and measured by the communication device, the parts information including type information indicating a type of each of the target parts. The management apparatus includes: an information acquisition unit configured to receive and acquire the acquisition information; a storage unit configured to store the parts information and the received strength included in the acquisition information previously acquired in association with each other for each of the type information; an installation position judgment unit configured to judge that, when parts information of the same type having the same type information as the acquired parts information comprised in the acquisition information is stored in the storage unit, whether or not the target part identified by the acquired acquisition information is provided at the installation position based on a judgment on whether or not a difference between the received strength associated with the acquired parts information and a received strength stored in association with the parts information of the same type exceeds a predetermined value; an information contents judgment unit configured to judge, when it is judged by the installation position judgment unit that the difference does not exceed the predetermined value and the target part is provided at the installation position, whether or not contents of the acquired parts information are the same as contents of the parts information of the same type; an update unit configured to, when it is judged by the information contents judgment unit that the contents of the acquired parts information are not the same as the contents of the parts information of the same type, store the acquired parts information and the received strength associated with the acquired parts information in the storage unit to update stored contents of the storage unit; and a notification unit configured to output malfunction information when it is judged by the installation position judgment unit that the difference exceeds the predetermined value and the target part is not provided at the installation position.

According to the above second aspect of the invention, the same advantages as those in the parts information management system according to the first aspect of the invention can be attained.

### BRIEF DESCRIPTION OF DRAWING(S)

Fig. 1 is a perspective view showing a hydraulic excavator as a working vehicle according to an exemplary embodiment of the invention.
Fig. 2 is a schematic view showing an inside of a machine compartment.
Fig. 3 is a schematic view showing an inside of a pump compartment.
Fig. 4 is a schematic view showing a configuration of an IC tag.
Fig. 5 illustrates parts information.
Fig. 6 is a block diagram showing a configuration of the hydraulic excavator and an overall configuration of a parts information management system.
Fig. 7 is a block diagram showing a configuration of a reader (master reader).
Fig. 8 is a block diagram showing a configuration of a reader (slave reader).
Fig. 9 is a block diagram showing a configuration of a management server.
Fig. 10 shows an example of server acquisition information.
Fig. 11 is a flowchart showing a parts information management process.

### DESCRIPTION OF EMBODIMENT(S)

An exemplary embodiment of the invention will be described below with reference to the attached drawings.

### Description of Entire Parts information management system

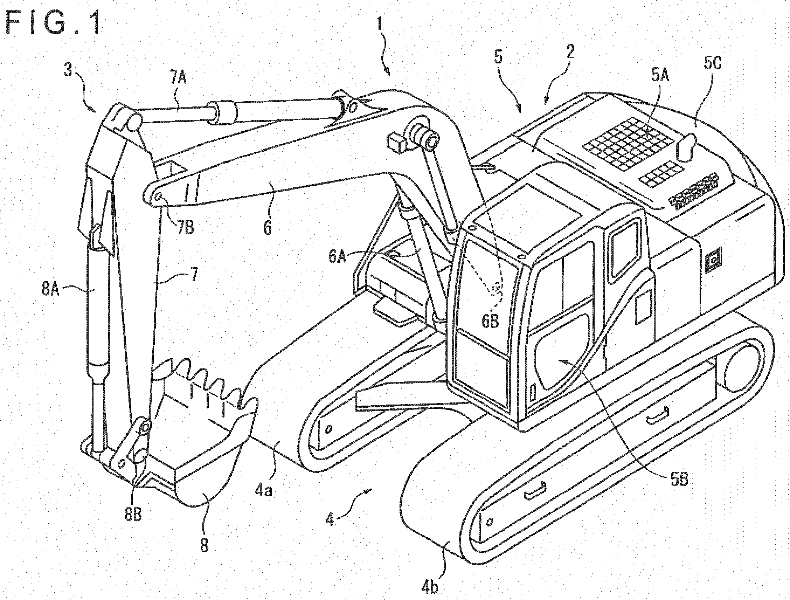

Fig. 1 is a perspective view showing a hydraulic excavator 1 as an example of a working vehicle in the exemplary embodiment.

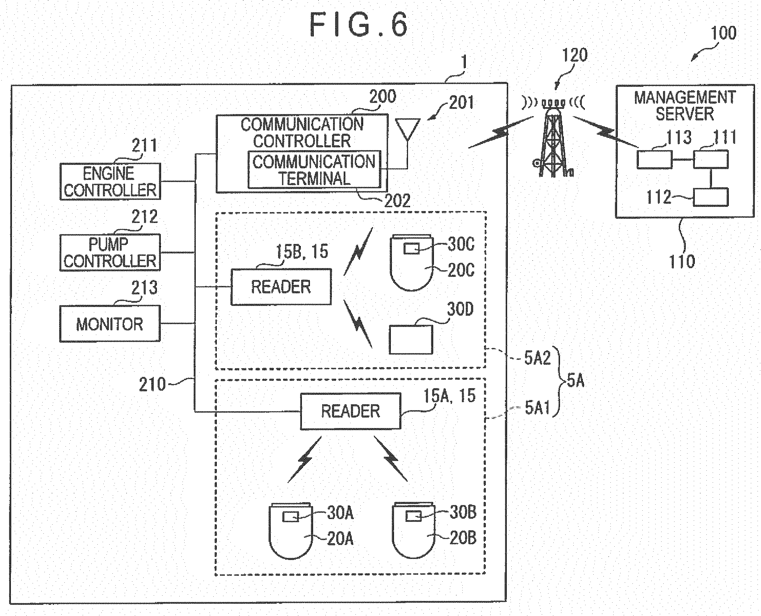

Though detailed later, a parts information management system 100 manages and monitors parts and engine EG installed in the working vehicle in a management center 110 located remote from the working vehicle (see Fig. 6) via the communication network 120. The parts information management system 100 includes the management center 110, at least one working vehicle (e.g.. the hydraulic excavator 1 shown in Fig. 1), and the communication network 120 that is used to transmit and receive information between the management center 110 and the working vehicle. The working vehicle for the parts information management system 100 may be of different types (e.g., a hydraulic excavator and a bulldozer).

Among these, the communication network 120 is used for data communication in a form of wireless communication, for which a mobile phone network and a satellite communication network are usable.

The parts information management system 100 including the hydraulic excavator 1 is exemplarily described below. However, the invention is also applicable to other working vehicles in a form of a construction machine.

### Description of Overall Hydraulic Excavator

In the exemplary embodiment, the hydraulic excavator 1 includes a vehicle body 2 and working equipment 3 as shown in Fig. 1. The vehicle body 2 includes a crawler unit 4 and an upper structure 5.

In the upper structure 5, a side where the working equipment 3 and a cab 5B are disposed is defined as a front and a side where a machine compartment 5A is disposed is defined as a back. A left side of the upper structure 5 facing the front is defined as a left and a right side of the upper structure 5 facing the front is defined as a right. In the hydraulic excavator 1 and the vehicle body 2, a side near the crawler unit 4 is defined as a bottom relative to the upper structure 5 while a side near the upper structure 5 is defined as a top relative to the crawler unit 4. When the hydraulic excavator 1 is disposed on a horizontal surface, the bottom is a side in a vertical direction, namely, a direction in which gravity acts, while the top is a side in a direction opposite the vertical direction.

In the exemplary embodiment, the hydraulic excavator 1 includes an internal combustion engine (e.g., a diesel engine) as a motive power generator. However, the motive power generator of the hydraulic excavator 1 is not limited to the internal combustion engine. For instance, the hydraulic excavator 1 may include the internal combustion engine, a generator motor and an electric storage device in combination (a so-called hybrid motive power generator). Alternatively, the hydraulic excavator 1 may include a motive power generator including a motor in place of the internal combustion engine.

### Machine Compartment

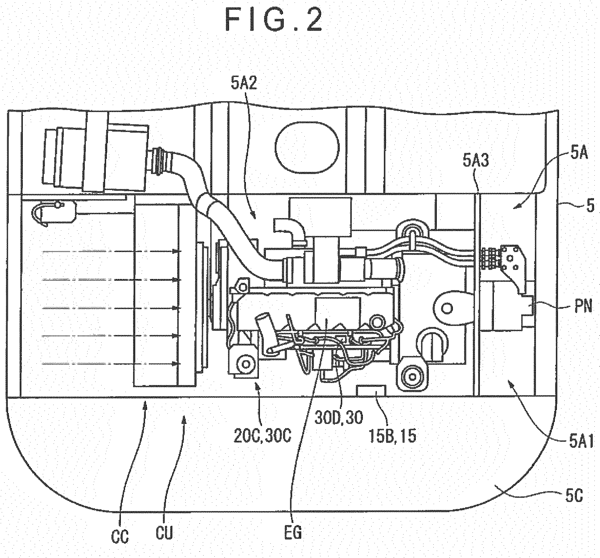

Fig. 2 is a schematic view showing the machine compartment 5A.

The upper structure 5 includes the machine compartment 5A, the cab 5B, and a counterweight 5C.

The machine compartment 5A is disposed at a first end (back side) of the upper structure 5. An inside of the machine compartment 5A is divided by a partition 5A3 into a pump compartment 5A1 and an engine compartment 5A2 as shown in Fig. 2. The pump compartment 5A1 is positioned on the right of the machine compartment 5A and the engine compartment 5A2 is positioned on the left of the machine compartment 5A, seen from the back.

### Engine Compartment

The engine compartment 5A2 houses an engine EG (motive power generator) and a cooling unit CU including a cooling core CC (e.g., radiator) and the like. The cooling unit CU is disposed adjacent to the engine EG and configured to cool cooling water flowing toward the engine EG and hydraulic fluid flowing in a hydraulic device (not shown).

The engine EG is disposed in a substantially sealed space defined by four sides including the counterweight 5C, a partition in front of the engine compartment 5A2. the partition 5A3 and a door (not shown) on the left, a top plate including an engine hood disposed above the engine EG (not shown), and a bottom plate (not shown).

Further, in the engine compartment 5A2, a filter 20C (a fuel main filter), an identification device 30C, an identification device 30D attached to the engine EG. and a reader 15B that is configured to communicate with the identification devices 30C and 30D are provided. These components will be described in detail later.

The cab 5B is disposed at a second end (front side) of the upper revolving body 5 as shown in Fig. 1.

The counterweight 5C is provided on the farthest back side of the upper structure 5. The counterweight 5C is provided for weight balance with the working equipment 3 and is filled with weights. In other words, the machine compartment 5A is interposed between the cab 5B and the counterweight 5C.

The crawler unit 4 includes crawlers 4a and 4b. The crawler unit 4 is driven by a hydraulic motor (not shown) to rotate the crawlers 4a and 4b. whereby the hydraulic excavator 1 travels or is turned.

The working equipment 3 is attached to a lateral side of the cab 5B of the upper structure 5 and includes a boom 6, arm 7, bucket 8, boom cylinder 6A, arm cylinder 7A and bucket cylinder 8A. A base end of the boom 6 is jointed to a front of the vehicle body 2 through a boom pin 6B, whereby the boom 6 is movably attached. A base end of the arm 7 is jointed to a leading end of the boom 6 through an arm pin 7B, whereby the arm 7 is movably attached. The bucket 8 is jointed to a leading end of the arm 7 through a bucket pin 8B. whereby the bucket 8 is movably attached.

### Description of Pump Compartment

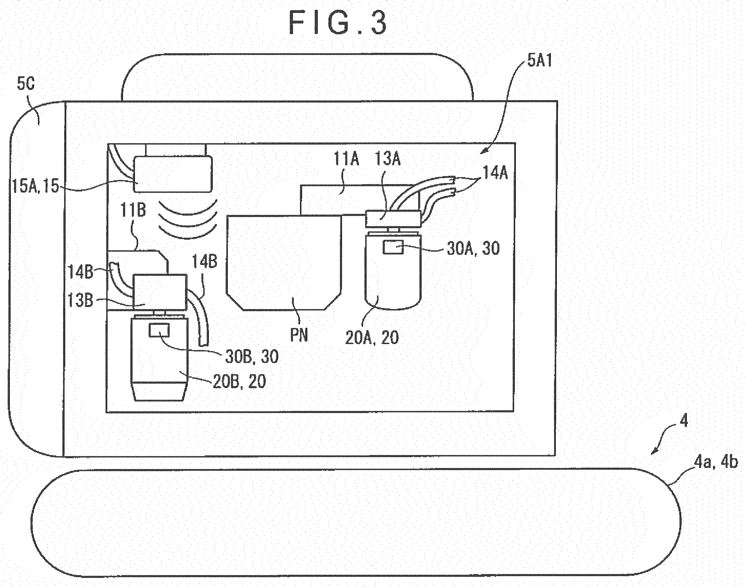

Fig. 3 is an illustration showing an inside of the pump compartment 5A1 with a door (not shown) opened from the right side of the upper structure 5. In other words, Fig. 3 is a schematic view showing a layout of the filter 20 (filters 20A and 20B) and the reader 15 (15A) in the pump compartment 5A1.

The pump compartment 5A1 is a substantially sealed space defined by being surrounded by four sides including the door (not shown) on the right, the counterweight 5C. a partition in front of the pump compartment 5A1 and the partition 5A3, the top plate (not shown) including the engine hood disposed above, and the bottom plate (not shown).

A hydraulic pump PN is housed in the pump compartment 5A1 as shown in Fig. 3. The hydraulic pump PN is mechanically connected to the engine EG and is driven by driving the engine EG. The hydraulic pump PN is configured to discharge hydraulic fluid to a hydraulic device (e.g. the above boom cylinder 6A).

Specifically, a bracket 11A, on which the hydraulic pump PN is provided, is provided in the pump compartment 5A1. A filter head 13A (filter holding part) is attached to the bracket 11A. A hose 14A is attached to the filter head 13A.

A filter head 13B is attached to the pump compartment 5A1 through a bracket 11B. A fuel hose 14B is attached to the filter head 13B.

### Filter Head in Pump compartment and Types of Filter

A filter 20A is attached to the filter head 13A. The filter 20A is an oil filter for the engine oil and is configured to remove dirt and the like contained in the engine oil flowing in the hose 14A.

The filter 20A is connected to the engine EG (see Fig. 2) through the hose 14A. The engine oil accumulated in the engine EG is pumped out of the engine EG to be transferred to the filter 20A. The engine oil after passing through the filter 20A is returned to the engine EG.

A filter 20B is attached to the filter head 13B. The filter 20B is a fuel pre-filter and is configured to remove dirt and the like contained in the fuel flowing in the fuel hose 14B. Note that the filter 20B is not requisite for the hydraulic excavator 1. The hydraulic excavator 1 without the filter 20B is also usable.

The filter 20B (fuel pre-filter) is connected to a fuel tank (not shown) through the hose 14B. The fuel in the fuel tank (not shown) is transferred to the filter 20B. Subsequently, the fuel is transferred to the filter 20C (fuel main flter). After passing through the filter 20C. the fuel is transferred to a fuel injector (not shown). The fuel remaining in the fuel injector is returned to the fuel tank through a hose (not shown).

As described above, the filters 20A and 20B are provided in the pump compartment 5A1 while the filter 20C is provided in the engine compartment 5A2.

The filters 20 (20A. 20B. 20C) are parts requiring a regular replacement since a filter member inside the filters is clogged by use of the filters 20. Timing for the regular replacement is judged, for instance, based on accumulated operational duration shown by SMR (service meter) that measures operational duration of the engine EG in the hydraulic excavator 1. Such a judgment process is conducted, for instance, by a communication controller 200, a monitor 213 or a management server 111. which will be described later.

Identification devices 30A. 30B and 30C are respectively attached to the filters 20A, 20B and 20C. The identification device 30D is attached to the engine EG as described above. In other words, the filters 20A, 20B and 20C and the engine EG are target parts to which the identification devices 30 (30A, 30B, 30C, 30D) are attached. It should be noted that, though the one of each of the different types of the filters is exemplarily provided in the single working vehicle in the exemplary embodiment, two or more of the different types of the filters may be provided in the single working vehicle may be plural. It should also be noted that the type of the target parts may be sometimes referred to as an item number, where different item numbers indicate different types of the parts.

### Description of Identification Device

The identification devices 30 (30A, 30B, 30C, 30D) store and provide information relating to the target parts (including devices such as the engine EG in addition to the replacement parts) to which the identification devices 30 are attached.

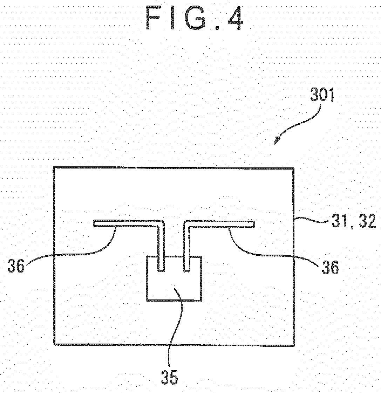

A passive type IC tag 301 that generates electric power by electromagnetic induction, microwaves and the like caused by electric waves outputted from the readers 15 (15A,15B) is usable as the identification devices 30A, 30B and 30C. In the exemplary embodiment, each of the identification devices 30A, 30B and 30C includes one or more of the IC tag 301 (identification part) (see Fig. 4). Accordingly, each of the identification devices 30A, 30B and 30C may include a single IC tag 301 or a plurality of the IC tags 301.

The identification device 30D includes a single passive-type IC tag 301 described above. The IC tag 301 of the identification device 30D may be the same as or different from the IC tags 301 of the respective identification devices 30A, 30B and 30C in shape and configuration. The IC tag 301 of the identification device 30D at least includes an antenna 36 and an IC chip 35. which will be described below.

Since each of the identification devices 30 thus includes the passive type IC tag 301, an internal battery is unnecessary, so that a cost is reducible and operation failure caused by a run-out battery is preventable.

### Description of IC Tag

Fig. 4 is a schematic view showing a configuration of the IC tag 301.

The IC tag 301 is an RFID (Radio Frequency Identification) tag in which the IC chip 35 and the internal antenna 36 are encapsulated with package materials 31 and 32.

The IC tag 301 of the exemplary embodiment can communicate in a communication frequency zone, namely, a UHF (ultrahigh frequency) zone, specifically, in a zone of 860 MHz to 960 MHz. The communication frequency zone of the RFID tag may be a zone other than the above zone.

The IC chip 35 is connected to the antenna 36. A shape and a size of the antenna 36 are set so that the antenna 36 can communicate with the readers 15A and 15B. The IC chip 35 and the antenna 36 are held between the package materials 31 and 32. Fig. 4 is an illustration with the package material 31 being seen through. The IC tag 301 is attached to each of the filters 20A, 20B and 20C and the engine EG with a bonding member such as a double-sided adhesive tape or an adhesive agent.

It should be noted that the above-described structure of the IC tag 301 is merely an example of a structure of an IC tag usable in the exemplary embodiment, and an IC tag of different structure is also usable.

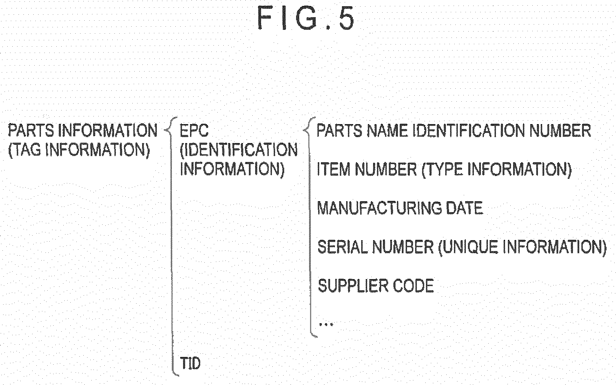

Fig. 5 illustrates contents of parts information.

As shown in Fig. 5, the IC chip 35 stores the parts information (tag information) including a code for identifying an IC chip 35 (TID: Tag Identifier) and a code for identifying a part (e.g., the filter 20 and the engine EG) to which each of the identification devices 30 is attached (EPC: Electronic Product Code).

Among the above codes. EPC stores identification information including a part name identification number for identifying a name of a part, the item number (type information) for specifying the type of the part to which each of the identification devices 30 is attached, a manufacturing date, a serial number (manufacturing number) (unique information) for specifying each of parts having the same item number, and a supplier code showing a manufacturer of the part. The part name identification number is used for identifying the parts such as an engine oil filter, fuel pre-filter and fuel main filter. For instance, an individual number is allocated to each of the parts as the part name identification number. When the part is the engine EG, an individual number allocated to the engine may be defined as the part name identification number. Moreover, when the part is the engine EG, the identification information includes, for instance, the number of times of overhaul of the engine EG.

The TID is unique information that is unique to each of the IC tags 301. Accordingly, with the item number of a certain target part and the TID of the IC tag 301 attached to the target part being acquired, even if a plurality of IC tags 301 are attached to the target part, the target part can be distinguished from other target part(s) of the same item number based on the item number and TID. It should be noted that, when the identification device 30 has only one IC tag 301, the target part can be distinguished from the other target parts of the same item number as long as the information on the item number and TID can be acquired from the identification device 30 even if the combination of the item number and TID is not known.

Further, the above serial number is unique information that is unique to one of target parts of the same item number. Accordingly, each of the target parts is distinguishable from the other target parts of the same item number based on the item number and the serial number.

### Description of Reader

Fig. 6 is a block diagram showing a configuration of the hydraulic excavator 1 and an overall configuration of the parts information management system 100 including the hydraulic excavator 1 in the exemplary embodiment.

The readers 15 (15A, 15B), which are communication devices to communicate with the identification devices 30A. 30B. 30C and 30D, are attached to the machine compartment 5A as shown in Fig. 6. The readers 15 read out parts information including the identification information (hereinafter, sometimes simply referred to as "data") stored in the respective IC tags 301 of the identification devices 30A, 30B, 30C and 30D. In the exemplary embodiment, the readers 15 each have a reading function. However, the readers 15 each may be replaced by a reader-writer having a writing function in addition to the reading function.

The reader 15A is provided in the pump compartment 5A1. The reader 15A communicates with the identification devices 30A and 30B respectively attached to the filters 20A and 20B and supposed to be positioned within a communication range of the reader 15A, under the control by the communication controller 200 (described later). The reader 15A reads out the parts information from the identification devices 30A and 30B assuming that the parts information is readable. Further, the reader 15A controls an operation of the reader 15B. In other words, the reader 15A serves as a master reader, while the reader 15B serves as a slave reader controllable by the master reader. The reader 15B reads out the parts information from the identification devices 30C and 30D assuming that the parts information is readable. Note that the communication range of the reader 15A indicates a range in which electric waves outputted from the reader 15A can reach the identification devices 30 and the reader 15A can receive response signals outputted from the identification devices 30 in response to the outputted electric waves. The same description is applied to a communication range of the reader 15B.

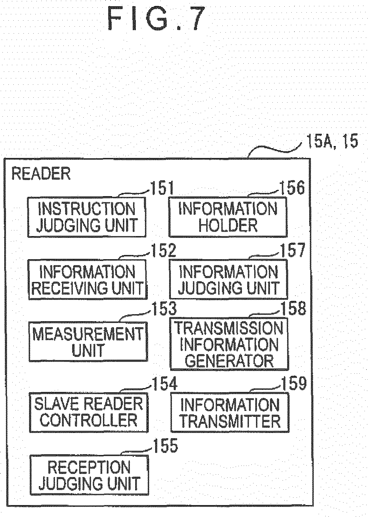

Fig. 7 is a block diagram showing a configuration of the reader 15A serving as the master reader.

As shown in Fig. 7, the reader 15A includes an instruction judging unit 151, information receiving unit 152, measurement unit 153, slave control unit 154, reception judging unit 155, information holder 156. information judging unit 157, transmission information generator 158 and information transmitter 159.

The instruction judging unit 151 judges whether or not instruction information of acquiring the parts information stored in the identification devices 30 is inputted from the communication controller 200 described later.

When the instruction judging unit 151 judges that the instruction information is inputted, the information receiving unit 152 outputs the electric waves to the identification devices 30 for a predetermined time and receives the electric waves outputted from the identification devices 30.

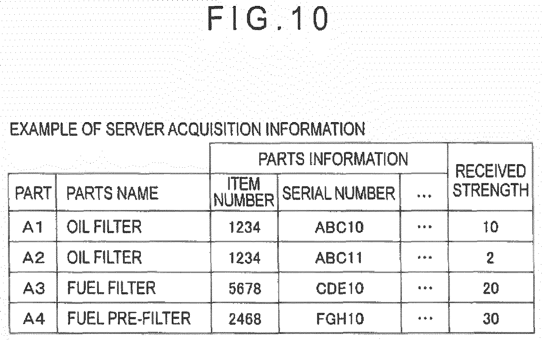

The measurement unit 153 measures a received signal strength indicator (RSSI) in a form of a received strength of the electric waves received from the identification device 30. The received strength measured by the measurement unit 153 is held in association with the parts information included in the measured electric waves by the later-described information holder 156. The information in which the received strength measured by the measurement unit 153 is associated with the parts information included in the electric waves is included in the information transmitted by the later-described information transmitter 159 (see Fig. 10).

The slave control unit 154 controls the operation of the reader 15B serving as the slave reader. For instance, the slave control unit 154 outputs the same instruction information as the above instruction information to the reader 15B. At this time, when a plurality of readers 15 (15B) operable as the slave readers are present, the slave control unit 154 may transmit the instruction information including information (i.e. information unique to the reader 15) designating the reader 15B whose operation is to be controlled.

The reception judging unit 155 judges whether or not the electric waves including the parts information stored in the identification devices 30 are received from the identification devices 30 based on the electric waves received by the information receiving unit 152. Moreover, the reception judging unit 155 judges whether or not the reader 15B is normally operated by judging whether or not the reception judging unit 153 can receive the parts information from the reader 15B within a predetermined time elapsed after the instruction information is outputted from the slave control unit 154.

When the reception judging unit 156 judges that the parts information is received from the identification devices 30 based on the electric waves outputted from the information receiving unit 152 and when the reception judging unit 155 judges that the parts information of the identification devices 30 is received from the reader 15 (15B) serving as the slave reader, the information holder 156 holds both of the above pieces of the parts information as master acquisition information. In other words, as the master acquisition information, the information holder 156 holds the parts information received from the identification devices 30A and 30B that are target parts of which parts information are supposed to be acquired by the reader 15A and the slave acquisition information including the parts information of the identification devices 30C and 30D acquired by the reader 15B.

At this time, the information holder 156 holds the acquired pieces of the parts information and the received strengths measured by the measurement unit 153 in association with each other. Specifically, the information holder 156 holds the parts information included in the electric waves received from the identification device 30A in association with the received strength of the electric waves, and also holds the parts information included in the electric waves received from the identification device 30B in association with the received strength of the electric waves. It should be noted that, since the parts information and the received strength are associated with each other also in the reader 15B, the slave acquisition information includes the parts information and the received strength for the identification device 30C that are associated with each other, and the parts information and the received strength for the identification device 30D that are associated with each other. The information holder 156 holds the master acquisition information including the pieces of the parts information and the corresponding received strengths.

The information judging unit 157 judges whether or not the slave acquisition information, which is included in the master acquisition information and held by the information holder 156. contains error information.

Moreover, the information judging unit 157 executes an overlapping judgment process of judging whether or not same pieces of parts information (i.e. the same pieces of parts information) is included in the held master acquisition information.

In the exemplary embodiment, the information judging unit 157 judges the parts information at least having the same item number and the same serial number to be the same pieces of parts information (parts information having identical EPC (identification information for identifying each of the target parts)). However, even when all of the identification devices 30A, 30B. 30C and 30D provided to the hydraulic excavator 1 have different item numbers (type information), as long as there is the parts information having the same item number as the item number read by the reader 15A or the reader 15B, the information judging unit 157 may judge the parts information to be the same pieces of parts information (parts information having the same identification information). Moreover, even when all of the identification devices 30A, 30B, 30C and 30D provided to the hydraulic excavator 1 have different serial numbers (unique information), as long as there is the parts information having the same serial number as serial number read by the reader 15A or the reader 15B, the information judging unit 157 may judge that the parts information is the same pieces of parts information (parts information having the same identification information).

Each of the identification devices 30A, 30B and 30C includes at least one IC tag 301. One of the readers 15 occasionally receives the parts information from the plurality of identification devices 30A, 30B and 30C, or the parts information from the identification device 30D, depending on the location of the IC tags 301. In other words, each of the readers 15 occasionally receives the parts information having different contents from the IC tags 301 of the identification devices 30.

On the other hand, a plurality of readers 15 (15A, 15B), which are disposed at different positions, occasionally receive the parts information from a single one of the identification devices 30, depending on location of the identification devices 30.

Accordingly, for instance, one of the readers 15 may receive the parts information from a single IC tag 301 of one of the identification devices 30. or alternatively, the plurality of readers 15 each may receive the parts information having the same identification information from the single IC tag 301 of single one of the identification devices 30. In other words, depending on communication conditions between the readers 15 and the identification devices 30, the readers 15 occasionally receive the parts information from one of the identification devices different from the identification device(s) 30 supposed to be positioned within the communication range of each of the readers 15.

In order to address the above problem, when the information judging unit 157 judges that the same pieces of parts information are contained in the master acquisition information, the information holder 156 executes an organizing process (merging process) of deleting the same pieces of parts information except for one of those to organize the same pieces of parts information.

Accordingly, the master acquisition information held by the information holder 156 does not contain the same pieces of parts information. Although the information holder 156 is configured to delete the parts information judged to be the same pieces of parts information except for one of those in the exemplary embodiment, instead of being deleted, the parts information judged to be the same pieces of parts information may be excluded from transmission information generated by the transmission information generator 158.

The transmission information generator 158 generates the transmission information including the master acquisition information held by the information holder 156. When the information judging unit 157 judges the same pieces of parts information are present, the transmission information generator 158 generates the transmission information including the organized master acquisition information.

When the reception judging unit 155 judges that the parts information of the identification devices 30A and 30B are not acquired, the transmission information generator 158 generates error information (operational information) including information indicating the reader 15 (15A) to which the transmission information generator 158 belongs and information indicating an operational state of the reader 15 (information indicating that communication between the reader 15 and the identification devices 30 is failed).

Further, when the reception judging unit 155 judges that the information from the reader 15B serving as the slave reader is not received within a predetermined time (i.e., when it is judged that the reader 15B is not normally operated), the transmission information generator 158 generates error information (operational information) including information indicating the reader 15 (15B) and information indicating an operational state of the reader 15 (information indicating that the reader 15B is not normally operated).

In addition, when the information judging unit 157 judges that the error information is contained in the information (slave acquisition information) received from the reader 15 (15B) serving as the slave reader, the transmission information generator 158 generates error information to be transmitted to the communication controller 200 based on the acquired error information. The information indicating the reader 15 (15B) as a transmission source and the information indicating the operation state of the reader 15 (information indicating that communication between the reader 15 and the identification devices 30 is failed), which are contained in the acquired error information, are to be transmitted as the error information to the communication controller 200.

The information transmitter 159 transmits the transmission information or the error information generated by the transmission information generator 158 to the communication controller 200 described later.

The reader 15B is provided in the engine compartment 5A2. The reader 15B is supposed to communicate with the identification device 30C attached to the filter 20C and the identification device 30D attached to the engine EG. Specifically, the reader 15B communicates with the identification devices 30C and 30D supposed to be positioned within the communication range of the reader 15B. The reader 15B executes a process of reading the parts information from the identification devices 30C and 30D under control by the reader 15A.

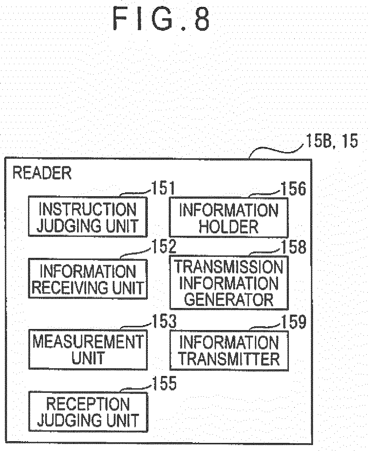

Fig. 8 is a block diagram showing a configuration of the reader 15B serving as the slave reader.

The reader 5B is configured in the same manner as the reader 15A except that some units are omitted. Specifically, as shown in Fig. 8. the reader 15B includes the above-described instruction judging unit 151, information receiving unit 152, measurement unit 153, reception judging unit 155, information holder 156, transmission information generator 158 and information transmitter 159.

The information holder 156 of the reader 15B holds the slave acquisition information including the parts information included in the electric waves received by the information receiving unit 152 from the identification devices 30C, 30D and the received strength measured by the measurement unit 153, which are associated with each other.

The transmission information generator 158 of the reader 15B generates transmission information based on the slave acquisition information held by the information holder 156. The information transmitter 159 transmits the transmission information to the reader 15A serving as the master reader. When the reception judging unit 155 judges that the parts information is not acquired from the identification devices 30 (30C, 30D) that are target parts of which parts information is acquired, the transmission information generator 158 of the reader 15B also generates the above error information and the information transmitter 159 transmits the error information.

In the exemplary embodiment, the reader 15B does not include the slave control unit 154 and the information judging unit 157 as described above. However, the reader 15B may have the slave control unit 154 and the information judging unit 157, where the slave control unit 154 and the information judging unit 157 are non-functional.

The information receiving unit 152 of the readers 15 communicates with the IC tags 301 of each of the identification devices 30. for instance, via electric waves in the UHF zone at 900 MHz. Since the readers 15 can communicate with the identification devices 30 (30A, 30B, 30C and 30D) that are about 1 m away from the readers 15 when the frequency of the electric waves falls within the above frequency zone, the readers 15 can be used even in the pump compartment 5A1 and the engine compartment 5A2.

In the exemplary embodiment, the readers 15 in a form of a reading device are used as communication devices. However, the reader 15 may be replaced by a reader-writer (reading and writing device) having a function of reading information from the identification device 30 and a function of writing information to the identification device 30.

Although two readers 15 (15A, 15B) are provided in the exemplary embodiment, only the reader 15A may be provided. Alternatively, the readers 15 may be provided by three or more readers including the readers 15A and 15B. Since a communication condition between the reader 15 and each of the identification device 30 depends on a relative positional relationship therebetween, with a plurality of readers 15, the parts information stored in the 1C tag can be read with higher probability.

### Description of Each Controller

As shown in Fig. 6, in addition to the above configuration, the hydraulic excavator 1 (working vehicle) further includes the communication controller 200, the readers 15A and 15B, an engine controller 211. a pump controller 212 and a monitor 213 and an in-vehicle network 210 that connects the communication controller 200, readers 15A and 15B, engine controller 211, pump controller 212 and monitor 213 to allow data communication therebetween.

The engine controller 211 is configured to adjust a fuel amount to be supplied to the engine EG to control output of the engine EG. The pump controller 212 is configured to control output of the pump PN.

The monitor 213 has a display function of displaying a remaining amount of the fuel, failure information of the hydraulic excavator 1 and the like, and also has an input function of setting the operation of the hydraulic excavator 1. The monitor 213 includes an SMR (service meter) that measures an operational duration of the engine EG of the hydraulic excavator 1, the SMR being displayed on the monitor 213. Information of the SMR (information of accumulated operational duration) is transmitted to the management center 110 through the communication controller 200 and the communication network 120.

The communication controller 200 has a communication terminal 202 connected to an antenna 201 in order to allow intercommunication with the management center 110 via a later-described communication network 120. The communication controller 200 serves as a controller for controlling the operations of the controllers 211 and 212, the monitor 213 and the readers 15. The communication controller 200 also serves as a processor for processing the information acquired from the readers 15. Further, the communication controller 200 serves as a transmitter for transmitting the information acquired from the readers 15 to the management server 111 of the management center 110 through the communication network 120. In other words, the communication controller 200 corresponds to the transmitter of the invention.

Accordingly, the communication controller 200 includes a storage for storing data acquired by the readers 15 and a program of processing the data. For instance, the program executes a process of comparing the data newly acquired by the readers 15 with the data stored in the storage. The communication controller 200 includes an arithmetic unit for executing such a process.

In the exemplary embodiment, the communication controller 200 activates the readers 15 when an operator of the hydraulic excavator 1 turns ON a key switch (not shown) to start the engine EG. In order to activate the readers 15. it is only required to turn the key switch to an accessory position to supply electric power from a battery (not shown) to electronic devices such as the communication controller 200 and the readers 15. In other words, the engine EG is not necessarily started in order to operate the readers 15.

A timing of activating the readers 15 is not limited to the above. For instance, a timer function may be provided to the communication controller 200 and the communication controller 200 may be set to activate the readers 15 at a predetermined timing (e.g.. once per day or once per week). In other words, the readers 15 may be activated on a regular basis to receive the parts information from the identification devices 30.

Alternatively, the communication controller 200 may activate the readers 15 in response to an operational instruction by the operator. Specifically, when the operator operates the operational button for generating a predetermined start signal, the communication controller 200 may activate the readers 15 on receiving the start signal.

Further alternatively, the communication controller 200 may activate the readers 15 in response to an operational instruction by an administrator of the management center 110 described later. Specifically, the communication controller 200 may be configured to activate the readers 15 when the administrator transmits a predetermined start signal from the management center 110 to the hydraulic excavator 1 via the communication network 120 and the communication controller 200 receives the start signal. Alternatively, instead of the operational instruction by the administrator, a start signal generation program for generating a start signal in a predetermined cycle may be executed by the management server 111 in the management center 110, thereby automatically transmitting the start signal to the hydraulic excavator 1.

In addition, a sensor may be provided to each of the filter heads 13A and 13B to detect attachment and detachment of the respective filters 20A, 20B and 20C (in which a filter head to be attached with the filter 20C is not shown), so that the readers 15 may be activated in response to the output from the sensor.

The communication controller 200 processes the data acquired by the readers 15 as described above. For instance, the communication controller 200 compares the above acquired data with the stored data. When the communication controller 200 judges that data is newly acquired, the communication controller 200 updates the stored data with the newly acquired data. Such a comparison process may be conducted in the management server 111 described later.

When the communication controller 200 transmits the data read by the identification devices 30 to the management server 111 of the management center 110 via the communication network 120, the communication controller 200 simultaneously transmits date-time data, vehicle type information indicating the type of the working vehicle on which the communication controller 200 is provided, and vehicle unique information (e.g. ID) unique to the working vehicle. Accordingly, the management server 111 can recognize the transmission source (i.e. one of the working vehicles) of the received information. It should be noted that the communication controller 200 includes, for instance, a timepiece IC (not shown) and can acquire the date-time data with the timepiece IC.

The date-time data may be exemplified by date and time when the readers 15 are activated (date and time when electric waves are transmitted), date and time when the readers 15 read the data of the identification devices 30, and date and time when the data of the identification devices 30 is transmitted to the management server 111. The date-time data may be replaced by data indicating a date or data indicating a time.

Note that a controller (e.g., the pump controller 212) other than the communication controller 200 or the readers 15 may have the above-described functions of the communication controller 200. For instance, when the reader 15 (15A) is capable of transmitting information to the management server 111, the reader 15 serves as the communication device and transmitter of the invention. When another controller has the information transmission function, this controller serves as the transmitter of the invention.

### Arrangement of Management Center

As shown in Fig. 6, the management center 110 includes the management server 111 that collectively manages various information including parts information acquired by each of the working vehicles.

The management server 111 includes a large-volume storage including hard disks and the like. The management server 111 can mutually communicate with a display 112 including monitor and the like, a communication device 113 capable of wireless communication or wired communication, and the like. The management server 111 manages and stores, for instance, the above parts information received from the hydraulic excavator 1, the information about the accumulated operational duration, and the like via the communication network 120. It should be noted that the management server 111 may be disposed at a site at which the working vehicle is operated, or may be disposed at a location remote from the site at which the working vehicle is operated. The management server 111 may be accessible by an administrator of the management server 111 or may be accessible by other administrator such as an administrator of the working vehicle and a maintenance worker of the working vehicle.

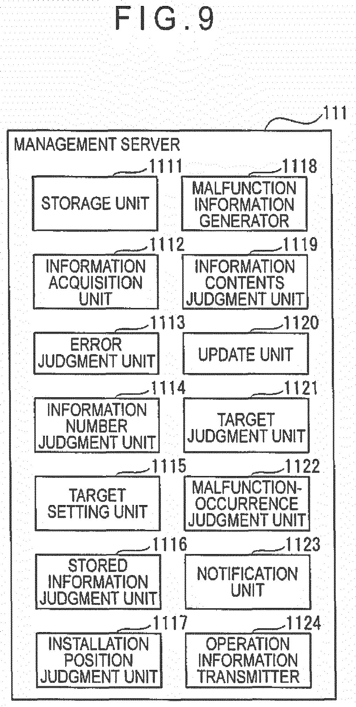

Fig. 9 is a block diagram showing a configuration of the management server 111.

Specifically, as shown in Fig. 9, the management server 111 includes a storage unit 1111 including the large-volume storage, and units operable when a program stored in the storage unit 1111 is run by a CPU (Central Processing Unit), the units including an information acquisition unit 1112, an error judgment unit 1113, an information number judgment unit 1114, a target setting unit 1115, a stored information judgment unit 1116, an installation position judgment unit 1117, a malfunction information generator 1118, an information contents judgment unit 1119, an update unit 1120, a target judgment unit 1121, a malfunction-occurrence judgment unit 1122, a notification unit 1123 and an operation information transmitter 1124.

The storage unit 1111 stores the program and data necessary for managing the parts information by the management server 111. For instance, the storage unit 1111 stores therein a parts information management program for performing the later-described parts information management process. In addition, the storage unit 1111 stores a database in which the type and number of parts (e.g. the filter 20) of each of the types of the working vehicles are stored. In other words, the storage unit 1111 stores the type information and the number of parts of the target part in association with each other. The types of working vehicle refer to the category of working vehicles (e.g. hydraulic excavator and bulldozer). The types of parts refer to the category of parts (e.g. oil filter and fuel pre-filter).

Further, the storage unit 1111 stores the acquisition information including the parts information and the received strength received from each of the working vehicles in association with the vehicle unique information of the working vehicle. It should be noted that the vehicle unique information may be a manufacturing number allocated to each of the working vehicles, or a serial number allocated to each of the communication controllers 200. In other words, it is only necessary for the vehicle unique information to be capable of distinguishing one of the working vehicles from the other working vehicles. At this time, the storage unit 1111 stores the TID and EPC contained in the received parts information in association with each other. Accordingly, by cross-checking the newly acquired parts information, which is a combination of the TID and EPC read from the IC tag 301, and the stored parts information (data), the management server 111 can judge whether or not the part (e.g., the filter 20) of the working vehicle is replaced and whether or not the replaced part is a genuine (official) product. By such a cross-checking, a time elapsed after the part is attached to the working vehicle can be grasped. Accordingly, for instance, the management server 111 can manage a replacement timing of the filter 20.

The information acquisition unit 1112 receives and acquires the information transmitted from the working vehicle (sometimes referred to as server acquisition information, hereinafter). It should be noted that, since the same pieces of parts information are merged in the processing in the reader 15A, the server acquisition information does not include the same pieces of parts information. However, the management server 111 (for instance, the information acquisition unit 1112) may perform the organizing process (merging process) as described above.

The error judgment unit 1113 judges whether or not error information is included in the server acquisition information. When it is judged that the error information is included in the server acquisition information by the judgment process, the error information is outputted by the later-described notification unit 1123.

The information number judgment unit 1114 acquires from the storage unit 1111 the number of parts of the working vehicle whose parts information is to be managed (i.e. the number of the target parts of the working vehicle; sometimes referred to as the number of parts, hereinafter) based on the vehicle type information included in the server acquisition information. The information number judgment unit 1114 performs an information-number judgment process in which whether or not the number of parts is the same as the number of the pieces of the parts information included in the server acquisition information is judged. The number of the pieces of the acquired parts information is supposed to be smaller than the number of parts when, for instance, the reader 15 cannot acquire the parts information from the identification device 30 located within the communication range of the reader 15 (e.g. when an imitation is provided at the installation position). The number of the pieces of the acquired parts information is supposed to be larger than the number of parts when, for instance, genuine products are provided not only at the installation position but also at a position(s) different from the installation position and the parts information is acquired from the identification device 30 attached to each of the genuine products. When it is judged that the number of the pieces of the parts information is not the same as the number of parts by the information number judgment unit 1114. error information is outputted by the later-described notification unit 1123.

Fig. 10 illustrates an example of the server acquisition information.

Specifically, in the information-number judgment process, the information number judgment unit 1114 judges whether or not parts information of the same type (parts information of the same item number (type information of the target part) and different serial number (unique information of the target part)) is included in the server acquisition information.

For instance, the parts A1 and A2 shown in Fig. 10. which have the same item number (type information), have different serial number (unique information). When the parts information of each of the parts A1 and A2 is acquired from the working vehicle, the information number judgment unit 1114 judges that the parts information of the part A1 and the parts information of the part A2 are the pieces of the parts information of the same type and that there are two pieces of the parts information of the same type.

When the information number judgment unit 1114 judges that the pieces of the parts information of the same type are present, the information number judgment unit 1114 acquires from the storage unit 1111 the number of parts corresponding to the item number included in the pieces of the parts information of the same type for the corresponding working vehicle. Then, the information number judgment unit 1114 judges whether or not the number of the pieces of the parts information of the same type is the same as the acquired number of parts.

When it is judged in the judgment process that the acquired number of parts is not the same as the number of parts stored in the storage unit 1111, the information number judgment unit 1114 further judges whether or not the number of the pieces of the parts information of the same type is larger than the number of parts.

The number of the pieces of the parts information of the same type is judged to be larger than the number of parts when, for instance, the filter 20A is already attached to the filter head 13A and, in addition, one or more of the same type of the filter 20A (the filter 20A not attached to the filter head 13A) is present. In contrast, the number of the pieces of the parts information of the same type is judged to be smaller than the number of parts when, for instance, a filter in a form of an imitation (a part not attached with the identification device 30) is attached to the filter head 13A, or a filter attached with an improper identification device 30 is provided.

Specifically, when an oil filter, a fuel filter and a fuel pre-filter are installed one for each in a certain working vehicle, the number of the target part (number of parts) is "3." The number of parts is stored in the storage unit 1111.

In contrast, when the parts information of the parts A1 to A4 shown in Fig. 10 is acquired from the working vehicle, the number of the pieces of parts information is "4." In this case, if the number of the actual target parts (number of parts) is "3" as mentioned above, the larger number of pieces of the parts information, of the same type than the number of the target parts are included in the parts information. Focusing only on the oil filter, since the working vehicle is designed to have only one oil filter, the actual number of parts is "1". In contrast, the server acquisition information indicates that the number of parts is "2" (i.e. the parts A1, A2).

In other words, in this instance, it is judged by the information judgment unit that the server acquisition information includes two pieces of the parts information of the same type and that more number of pieces of the parts information of the same type than the supposed number of parts (i.e. the number of the oil filter) stored in the storage unit 1111 are present in the server acquisition information.

When it is judged that the number of the pieces of the parts information is not the same as the number of parts acquired from the storage unit 1111 by the information number judgment unit 1114, error information is outputted by the later-described notification unit 1123.

Referring back to Fig. 9, the target setting unit 1115 selects one to be judged from the pieces of the parts information (acquired parts information) included in the server acquisition information to judge whether or not the selected parts information is to be registered in the database. The target setting unit 1115 sets the parts information to be judged (i.e. one of the pieces of the parts information in the acquired parts information; sometimes referred to as target parts information hereinafter) by, for instance, sorting the pieces of acquired parts information in a predetermined condition and selecting the sorted pieces of acquired parts information one by one in descending order.

The stored information judgment unit 1116 judges whether or not the parts information acquired in the past and stored for each of the working vehicles includes the parts information with the same type information (item number in the exemplary embodiment) as that of the target parts information (sometimes referred to as the parts information of the same type hereinafter). The stored information judgment unit 1116 judges that the parts information of the same type is not stored when, for instance, information is acquired from the identification device attached to a part other than the target part of the working vehicle.

The installation position judgment unit 1117 is operable when the stored information judgment unit 1116 judges that the parts information of the same type is stored. The installation position judgment unit 1117 judges whether a difference between the received strength associated with the target parts information and the received strength associated with the parts information of the same type (i.e. the received strength measured and stored in the storage unit 1111 when the parts information was acquired from the identification device 30 attached to the target part provided at the same installation position) exceeds a predetermined value. More specifically, the installation position judgment unit 1117 judges whether or not an absolute value of the difference exceeds the predetermined value. It should be noted that the predetermined value is set in consideration of a temporary change in the received strength due to an environmental factor.

By performing the above judgment process, the installation position judgment unit 1117 judges whether or not the target part (e.g. the filter 20A) identified by the target parts information is provided at the predetermined installation position (e.g. the filter head 13A).

When it is judged that the difference does not exceed the predetermined value, it is judged that the target part is provided at the installation position because the received strength associated with the target parts information is close enough to the electric wave outputted from the identification device 30 of the target part provided at the installation position in the past. In contrast, when it is judged that the difference exceeds the predetermined value, the difference from the previously measured received strength is judged to become large since the target part is provided at a position different from the installation position and thus the target part is judged not to be provided at the installation position (provided at a position different from the installation position).

The malfunction information generator 1118 is operable when it is judged by the installation position judgment unit 1117 that the target part is not provided at the installation position. The malfunction information generator 1118 is configured to generate malfunction information. The malfunction information includes the vehicle unique information, the target parts information, and installation detail information indicating that the target part identified by the target parts information is provided at a position different from the predetermined installation position. In addition, the malfunction information includes information indicating that an imitation may be provided at the installation position. It should be noted that the malfunction information may include other information.

The information contents judgment unit 1119 is operable when it is judged by the installation position judgment unit 1117 that the target part is not provided at the installation position. The information contents judgment unit 1119 is configured to judge whether the contents of the target parts information are the same as the contents of the corresponding parts information of the same type. Specifically, the information contents judgment unit 1119 compares the EPC included in the target parts information and the EPC in the parts information of the same type and judges whether or not the contents of the EPC of the target parts information and the parts information of the same type are the same.

The information contents judgment unit 1119 judges that the contents are the same when, for instance, the target part provided at the installation position is not replaced.

The update unit 1120 is operable when the information contents judgment unit 1119 judges that the contents of the target parts information are not the same as the contents of the parts information of the same type. The update unit 1120 is configured to update the contents of the parts information of the same type stored in the storage unit 1111 with the contents of the target parts information. For instance, the update unit 1120 stores the contents of the target parts information as the latest parts information corresponding to the item number in the storage unit 1111 or overwrites the contents of the parts information of the same type with the contents of the target parts information. Further, the update unit 1120 updates the received strength stored in association with the parts information of the same type with the received strength associated with the target parts information.

It should be noted that, in the exemplary embodiment, the update unit 1120 is configured to finalize the update contents (change details) when the later-described malfunction-occurrence judgment unit 1122 judges that the malfunction information is not present, and to register the parts information and the received strength in the database stored in the storage unit 1111, thereby updating the stored contents of the storage unit 1111. In contrast, when it is judged that an error has occurred or the malfunction information is present, the update unit 1120 is configured to cancel the update (change) to roll back the database. With the above arrangement, the parts information and received strength of each of the target parts can be kept unregistered until the target parts are provided at the installation position.

However, an alternative arrangement is possible, where the target parts information and the received strength are sequentially registered in the database when the information contents judgment unit 1119 judges that the contents of the target parts information are not the same as the contents of the parts information of the same type.

Further, the update unit 1120 may alternatively be configured to register only proper piece of the parts information and corresponding received strength without rolling back the database when it is judged that an error has occurred or the like, or may be configured to attach a malfunction flag (a flag indicating malfunction) to all of the pieces of the parts information included in the server acquisition information or the possibly improper parts information before the parts information is registered.

The target judgment unit 1121 is configured to judge whether or not all of the pieces of parts information included in the server acquisition information has been selected as the target parts information. When it is judged by the target judgment unit 1121 that one or more of the pieces of parts information are not selected as the target parts information, one of the pieces of the parts information that is not selected by the target setting unit 1115 as the target parts information is set as the target parts information.

The malfunction-occurrence judgment unit 1122 is configured to judge whether or not malfunction information to be outputted is present when the target judgment unit 1121 judges that all of the pieces of the parts information have been selected as the target parts information. Specifically, the malfunction-occurrence judgment unit 1122 judges that, when the malfunction information has been generated by the malfunction information generator 1118, the malfunction information to be outputted is present and, when the malfunction information is not generated, the malfunction information to be outputted is not present.

When the malfunction-occurrence judgment unit 1122 judges that the malfunction information to be outputted is present, the notification unit 1123 outputs the malfunction information and the vehicle unique information of the working vehicle included in the server acquisition information. In the exemplary embodiment, the notification unit 1123 is configured to output the malfunction information by displaying the malfunction information on the display 112. However, the above arrangement is not exhaustive and the malfunction information may be outputted by an audio output using an audio output unit (e.g. a speaker).

Further, the notification unit 1123 is configured to output the vehicle unique information and the error information when the error judgment unit 113 judges that error information is included in the server acquisition information.

Furthermore, the notification unit 1123 outputs information indicating that an appropriate number of pieces of parts information could not be acquired when the information number judgment unit 1114 judges that the number of parts information included in the server acquisition information is not the same as the number of parts.

In addition, the notification unit 1123 is configured to output information indicating that information acquired from part(s) other than the target part of the working vehicle is included when the stored information judgment unit 1116 judges that the parts information, of the same type is not stored.

The operation information transmitter 1124 is configured to transmit operation information for operating the working vehicle via the communication network. For instance, the operation information transmitter 1124 is configured to transmit the operation information for reducing the output of the engine EG to protect the engine EG to the working vehicle identified by the vehicle unique information included in the server acquisition information when the installation position judgment unit 1117 judges that the filter 20A (the target part) is not provided to the filter head 13A. It should be noted that the above operation information is not necessarily transmitted.

### Parts Information Management Process

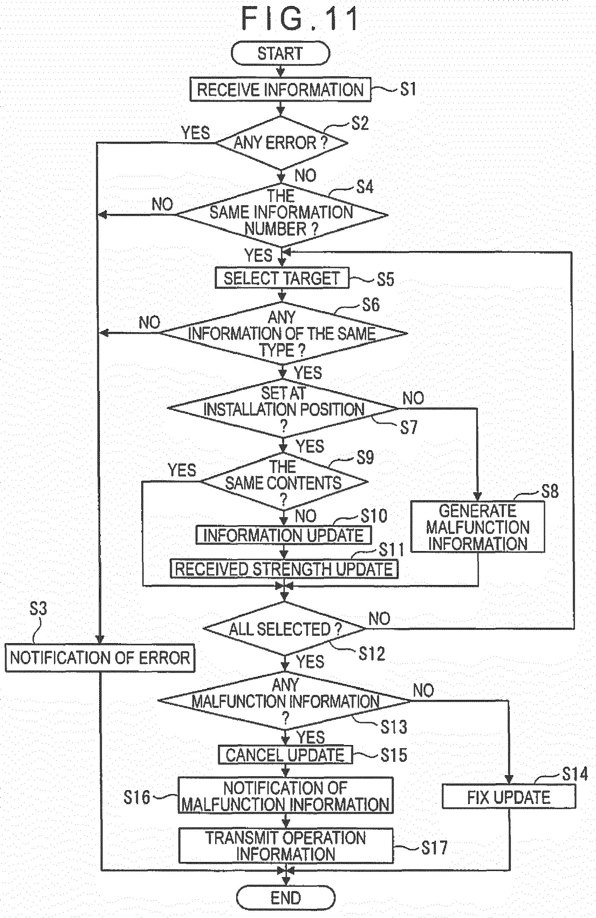

Fig. 11 is a flow chart showing a parts information management process executed in the management server 111.

The management server 111 is configured to run the parts information management program to perform the parts information management process described below. Then, the management server 111 notifies, for instance, the administrator of the parts information of the part that may be not provided at the corresponding installation position.

Specifically, in the parts information management process shown in Fig. 11. the information acquisition unit 1112 of the management server 111 receives and acquires the information transmitted from the working vehicle such as the hydraulic excavator 1 (Step S1).

Subsequently, the error judgment unit 1113 judges whether or not the acquired information (server acquisition information) includes the error information (Step S2).

When it is judged in the judgment process in Step S2 that the error information is included (Step S2, YES), the notification unit 1123 outputs error contents including the error information (Step S3).

After Step S3, the management server 111 ends the parts information management process.

In contrast, when it is judged in the judgment process in Step S2 that the error information is not included (Step S2, NO), the information number judgment unit 1114 judges whether or not the number of the parts information included in the server acquisition information is the same as the number of parts corresponding to the vehicle type information included in the server acquisition information (Step S4).

When it is judged in the judgment process in Step S4 that the number of the parts information is not the same as the number of parts (Step S4, NO), the management server 111 proceeds to a process in Step S3. In Step S3, the notification unit 1123 outputs error information indicating that, for instance, an appropriate number of the parts information could not be obtained. Subsequently, the management server 111 ends the parts information management process as described above.

In contrast, when it is judged in the judgment process in Step S4 that the number of the parts information is the same as the number of parts (Step S4. YES), the target setting unit 1115 selects one of the pieces of the parts information included in the server acquisition information as the target parts information (Step S5).

Then, the stored information judgment unit 1116 judges whether or not the pieces of the parts information stored in the storage unit 1111 and corresponding to the vehicle unique information included in the server acquisition information include the parts information (the parts information of the same type) having the same item number as the target parts information (Step S6).

When it is judged in the judgment process in Step S6 that corresponding parts information of the same type is not present (Step S6, NO), the management server 111 proceeds to a process in Step S3. In Step S3, the notification unit 1123 outputs error information indicating that, for instance, a part different from the parts of the working vehicle may be provided. At this time, when the already selected target parts information is registered in the database, the update unit 1120 rolls back the database. Subsequently, the management server 111 ends the parts information management process as described above.

In contrast, when it is judged in the judgment process of Step S6 that corresponding parts information of the same type is present (Step S6, YES), the installation position judgment unit 1117 judges whether or not the target part identified by the target parts information is provided at the predetermined installation position (Step S7). Specifically, the installation position judgment unit 1117 judges whether a difference between the received strength included in the server acquisition information and associated with the target parts information and the received strength stored in the storage unit 1111 and associated with the parts information of the same type exceeds the predetermined value as described above, thereby judging whether or not the corresponding target part is provided at the installation position.

When it is judged in the judgment process of Step S7 that the difference exceeds the predetermined value and the corresponding target part is not provided at the installation position (Step S7, NO), the malfunction information generator 1118 generates the malfunction information (Step S8). As described above, the malfunction information includes the vehicle unique information, the target parts information, and installation detail information indicating that the corresponding target part is provided at a position different from the installation position. It should be noted that, when the process in Step S8 is performed again, the target parts information and the installation detail information are added to the malfunction information.

After Step S8, the management server 111 proceeds to the process in Step S12.

In contrast, when it is judged in the judgment process of Step S7 that the difference does not exceed the predetermined value and the corresponding target part is provided at the installation position (Step S7, YES), the information contents judgment unit 1119 judges whether or not the contents of the EPC of the target parts information are the same as the contents of the EPC of the parts information of the same type (Step S9). It should be noted that whether or not the contents of TID are the same may be judged as necessary in addition to judging whether or not the contents of the EPC are the same for the target parts information and the parts information of the same type. TID is the information unique to each of the IC chips 35 and cannot be rewritten by a user. Accordingly, by judging whether or not the contents of the TIDs are the same, whether or not the target parts information is the same as the stored parts information of the same type can be accurately judged.

When it is judged in the judgment process in Step S9 that the contents of the target parts information are the same as the contents of the stored parts information of the same type (Step S9, YES), the management server 111 proceeds to a process in Step S12.

In contrast, when it is judged in the judgment process in Step S9 that the contents of the target parts information are the same as the contents of the stored parts information of the same type (Step S9, NO), the update unit 1120 updates the parts information of the same type stored in the storage unit 1111 with the contents of the target parts information (Step S10). Further, the update unit 1120 updates the received strength stored in association with the parts information of the same type with the received strength associated with the target parts information (Step S11). Thus, the contents of the parts information of the same type and the corresponding received strength are updated with the contents of the target parts information and corresponding received strength included in the server acquisition information.

After Step S11, the management server 111 proceeds to the process in Step S12.

In Step S12, the target judgment unit 1121 judges whether or not all of the pieces of the parts information included in the server acquisition information have been selected as the target parts information (Step S12).

When it is judged in the judgment process in Step S12 that the parts information that has not been selected as the target parts information is present (Step S12, NO), the management server 111 returns to the process in Step S5 and one of the pieces of the parts information that has not been selected as the target parts information is selected as the target parts information by the target setting unit 1115.

In contrast, when it is judged in the judgment process in Step S12 that all of the pieces of the parts information have been selected as the target parts information (Step S12, YES), the malfunction-occurrence judgment unit 1122 judges whether or not the malfunction information to be outputted (malfunction information generated by the malfunction information generator 1118) is present (Step S13).

When it is judged in the judgment process in Step S13 that the malfunction information to be outputted is not present (Step S13, NO), the update unit 1120 finalizes the update contents in Steps S10, S11 and registers the pieces of the parts information and the received strengths in the database (Step S14).

After Step S14, the management server 111 ends the parts information management process.

In contrast, when it is judged in the judgment process in Step S13 that the malfunction information to be outputted is present (Step S13, YES), the update unit 1120 cancels the update process in Steps S10, S11 and rolls back the database (Step S15).

Further, the notification unit 1123 outputs the malfunction information (Step S16). In addition, the operation information transmitter 1124 transmits the operation information to the working vehicle identified by the vehicle unique information included in the server acquisition information (Step S17).

After Steps S15 to S17, the management server 111 ends the parts information management process.

The management server 111 performs the above-described parts information management process to output the malfunction information, for instance, in the following circumstances.

It sometimes occurs in the hydraulic excavator 1 that, for example, a non-genuine flter (i.e. a filter of the same type as that of the filter 20A but without the identification device 30; sometimes referred to as an imitation filter) is attached to the filter head 13A and the filter 20A is present in the vicinity of the filter head 13A. In this case, though the parts information cannot be acquired from the imitation filter but the parts information may sometimes be acquired from the filter 20A present in the vicinity of the filter head 13A. Accordingly, it may be incorrectly recognized that the filter 20A is provided on the filter head 13A.

However, the management server 111 can judge whether or not the filter 20A is provided on the filter head 13A (i.e. the predetermined installation position) by judging whether or not the difference between the received strength of the electric wave outputted from the identification device 30A of the filter 20A and the received strength of the electric wave outputted from the identification device 30A of the genuine product provided on the filter head 13A in the past exceeds the predetermined value. When it is judged that the filter 20A is provided at a position different from the filter head 13A, it can be determined that an imitation filter is provided on the filter head 13A. Accordingly, the administrator can be notified of the presence of the filter 20A left uncollected at the position other than the installation position and the use of the imitation filter.

### Advantage(s) of Embodiment(s)

According to the above described the parts information management system 100 in the exemplary embodiment, the following advantages can be attained.

In the management server 111. the installation position judgment unit 1117 judges, based on the received strength of the electric wave (the electric wave outputted by the identification device 30) measured by the reader 15, whether or not the identification device 30 in which the parts information included in the electric wave is stored or, consequently, the target part (e.g. the filter 20A) attached with the identification device 30 is provided at the installation position (e.g. the filter head 13A). When it is judged that the target part is not provided at the installation position (i.e. provided at a position different from the installation position), the notification unit 1123 outputs the malfunction information. According to the above arrangement, whether or not the target part of the identification device 30 is provided at the installation position can be appropriately judged and, when the target part is provided at a position different from the installation position, the malfunction information can be reliably outputted. Thus, for instance, the administrator of the management server 111 can recognize the installation state of the target part on the side of the management server 111.

The installation position judgment unit 1117 judges whether or not the difference between the received strength associated with the target parts information (acquired parts information) and the received strength stored in the storage unit 1111 and measured when the parts information of the same type having the same item number as the target parts information was acquired in the past exceeds the predetermined value. Upon judgment that the difference does not exceed the predetermined value, the installation position judgment unit 1117 judges that the target part is provided at the installation position. Upon judgment that the difference exceeds the predetermined value, the installation position judgment unit 1117 judges that the target part is provided at a position different from the installation position.

According to the above arrangement, since the comparison between the newly measured received strength and the received strength obtainable when the target part is provided at the installation position can be made, the installation state of the target part can be more appropriately recognized. Further, when it is judged that the target part in a form of the genuine product is not provided at the installation position, it is highly likely that an imitation is provided at the installation position. Since the notification unit 1123 outputs the malfunction information including the information indicating that an imitation is highly likely to be provided, the presence of the imitation can be recognized on the side of the management server 111.

Further, the judgment on the difference between the received strength associated with the target parts information (newly measured received strength) and the received strength measured in the past is made by the installation position judgment unit 1117 for each of the item numbers (type information) included in the target parts information. Accordingly, even when different pieces of the parts information with different item numbers are acquired from the identification devices 30 by the reader 15 under the presence of a plurality of target parts of different type each attached with the identification device 30, the difference between the received strength associated with each of the pieces of the parts information and the received strength measured in the past can be appropriately judged. Accordingly, even when a plurality of target parts of different types are present, the installation state of each of the target parts can be appropriately recognized.

It should be noted that the received strength of the electric waves temporarily changes due to the environmental factor. Since the predetermined value is set in consideration of the temporary change in the received strength due to the environmental factor, whether or not the target part is provided at a position different from the installation position can be reliably and appropriately determined irrespective of the temporary change due to the environmental factor and the like. Accordingly, the installation state of the target part can be appropriately recognized.

When the installation position judgment unit 1117 judges that the target part is provided at the installation position, the information contents judgment unit 1119 judges whether or not the contents (EPC) of the target parts information are the same as the contents (EPC) of the parts information of the same type. When it is judged that the contents of the target parts information are not the same as the contents of the parts information of the same type, it is judged that a new target part is provided at the installation position and the update unit 1120 stores the parts information of the target part (target parts information) in the storage unit 1111. According to the above arrangement, the parts information of the latest target part provided at the installation position can be kept in record. Thus, the part information can be appropriately managed.

The hydraulic excavator 1 includes, in addition to the identification device 30 attached to the target part and the reader 15, the communication controller 200 (transmitter) for transmitting the acquisition information in which the parts information and the received strength acquired and measured by the reader 15 are associated with each other. Further, the management center 110 includes the management server 111 and the management center 110 and the hydraulic excavator 1 are wirelessly communicated via the communication network 120. With the above arrangement, the parts information of the target part provided in the hydraulic excavator 1 (working vehicle) and the received strength associated with the parts information can be managed via the communication network 120 by the management center 110 remote from the hydraulic excavator 1. Accordingly, the installation state of the target part of the hydraulic excavator 1 can be recognized at the management center 110.

### Modification(s)

The scope of the invention is not limited to the above exemplary embodiment but includes modifications and improvements as long as the modifications and improvements are compatible with an object of the invention.

In the exemplary embodiment, when the difference between the received strength included in the server acquisition information and associated with the target parts information and the received strength stored in association with the parts information of the same type acquired in the past exceeds the predetermined value, it is judged that the target part identified by the target parts information is provided at a position different from the predetermined installation position. However, the arrangement of the invention is not limited to the above. Specifically, the comparison with the received strength acquired in the past is not necessarily performed. For instance, a received strength obtainable when the target part is provided at the installation position may be measured in advance, whether or not the newly measured received strength exceeds a predetermined range encompassing the received strength measured in advance may be determined, and it may be judged that the corresponding target part is provided at a position different from the installation position when the newly measured received strength exceeds the predetermined range. Further, the predetermined range can be appropriately set based on the environmental factor, the strength of the electric wave outputted by the identification device, the change in the received strength depending on the change in the position of the target part and the like.

Though the parts information management process described in the above exemplary embodiment includes Step S1 to S17, the arrangement of the invention is not limited to the above. For instance, it is not necessary to perform the judgment process by the information number judgment unit 1114 in Step S4 and/or the transmission process of the operation information by the operation information transmitter 1124 in Step S17. In other words, as long as the judgment process by the installation position judgment unit 1117 in Step S7, the malfunction information generation process by the malfunction information generator 1118 in Step S8 and the notification process by the notification unit 1123 in Step S16 are performed, the details of the parts information management process and the order of the Steps can be changed as desired, and the arrangement of the management server 111 can be changed as desired.

In the exemplary embodiment, the received strength whose difference from the received strength associated with the target parts information is judged by the installation position judgment unit 1117 is the received strength (the received strength measured in the past) stored in association with the corresponding parts information of the same type. Further, the stored received strength is the received strength stored in the storage unit 1111 in Step S10, that is, the received strength measured when the new target part is provided at the installation position. However, the arrangement of the invention is not limited to the above. For instance, a received strength associated with the target parts information of the target part and judged to be provided at the installation position when the parts information management process is performed in the last time may be stored, and whether or not the difference between the stored received strength and the newly measured received strength exceeds the predetermined value may be judged. In addition, whether or not a difference between an average strength of the received strength(s) measured in the past and the newly measured received strength exceeds the predetermined value may be judged.

In the exemplary embodiment, the parts information management system 100 includes the working vehicle such as the hydraulic excavator 1, the management center 110, and the communication network 120 wirelessly connecting the management center 110 and the working vehicle. However, the arrangement of the invention is not limited to the above. For instance, the component(s) of the management server 111 may be provided in the working vehicle. In this case, for instance, the component(s) of the management server 111 may be provided to the communication controller 200 and/or the monitor 213.

In the above exemplary embodiment, each of the identification devices 30A. 30B and 30C includes at least one IC tag 301. Accordingly, each of the identification devices 30A, 30B and 30C may be provided with a single IC tag 301 as in the identification device 30D. Alternatively, each of the identification devices 30A, 30B and 30C may be provided with three or more IC tags 301. Moreover, the number of the identification device 30 (i.e. the number of the target parts to which the identification device 30 is attached) provided to the working vehicle is appropriately changeable. Further, the IC tag 301 (identification part) is not necessarily configured as described above, but may be differently configured as long as the IC tag 301 is provided with the IC chip 35.

In the above exemplary embodiment, the identification devices 30A, 30B and 30C are respectively provided to the filters 20A, 20B and 20C, and the identification device 30D is provided to the engine EG. However, the arrangement of the invention is not limited to the above. The target component to which the identification device 30 may be appropriately changeable or increasable. The identification device 30 may be provided to any component (including any device) configuring the working vehicle irrespective of whether the target component is a replacement component or not.

In the above exemplary embodiment, the reader 15A serving as the master reader is disposed in the pump compartment 5A1 of the machine compartment 5A and the reader 15B serving as the salve reader is disposed in the engine compartment 5A2 separated from the pump compartment 5A1 through the partition 5A3 in the machine compartment 5A. However, the arrangement of the invention is not limited to the above. In the working vehicle, the readers 15 are not necessarily disposed in the machine compartment 5A, but may be disposed at any position where the readers 15 can communicate with the identification devices 30 to be removed together with the replacement part. Moreover, the position where the master reader is disposed and the position where the slave reader is disposed are not necessarily separated by a partition (e.g., the partition 5A3).

In the above exemplary embodiment, the reception judging unit 155 of the reader 15A judges that the reader 15B is not normally operated when the transmission information is not received from the reader 15B. However, the arrangement of the invention is not limited to the above. The operational condition of the reader 15B may be judged based on other indexes. For instance, a temperature sensor may be provided in the engine compartment 5A2. When a temperature measured by the temperature sensor falls out of the allowable temperature range of the reader 15, the reader 15B may be judged not to be normally operated.

In the above exemplary embodiment, after the reader 15A receives and acquires the parts information, the reader 15A outputs the instruction information, whereby the reader 15B receives and acquires the parts information. However, the arrangement of the invention is not limited to the above. After the reader 15B serving as the slave reader receives and acquires the parts information, the reader 15A serving as the master reader may receive and acquire the parts information.

In the above exemplary embodiment, the hydraulic excavator 1 (working vehicle) includes two readers 15 in which the reader 15A serves as the master reader and controls the reader 15B serving as the slave reader. The number of the readers 15 is not limited to two but changeable as desired. Further, the reader 15B is not necessarily controlled by the other reader 15 (15A).

Furthermore, only a single reader 15 may be provided to the working vehicle. When there are only a small number of target parts attached to the identification devices, when the target parts are densely provided in a small range, or the like, the single reader 15 is enough to acquire the parts information from all the identification devices on the target parts. Also in such instances, the reader 15 may judge whether or not the acquired parts information contains the parts information having the same identification information, and, when the reader 15 judges that the acquired parts information contains the parts information having the same identification information, the reader 15 may execute the organizing process (merging process). Further, the reader 15 may be configured to be capable of acquiring the received strength of the received electric wave.

In the above exemplary embodiment, the reader 15B has no information judging unit 157 and the information holder 156 of the reader 15B does not execute the organizing process. However, the arrangement of the invention is not limited to the above. Specifically, the reader 15B may also include the information judging unit 157. When the information judging unit 157 judges that the slave acquisition information contains the same parts information, the information holder 156 of the reader 15B may execute the above organizing process of merging the same pieces of parts information contained in the slave acquisition information.

In this case, the same pieces of parts information are merged in the reader 15B when it is judged that the same pieces of parts information is acquired and contained in the slave acquisition information including the parts information that is acquired from the identification devices 30 supposed to be positioned within the communication range or the identification devices 30 supposed to be not positioned within the communication range (e.g., when a filter 20 is provided with identification devices 30 storing the same parts information). Accordingly, when the reader 15B acquires the same pieces of parts information from each of the identification devices, the reader 15B merges the same pieces of parts information and transmits the merged slave acquisition information to the reader 15A. On the other hand, when it is judged that the same pieces of parts information are not included, the reader 15B transmits the held slave acquisition information to the reader 15A.

This arrangement prevents the slave acquisition information to be transmitted to the reader 15A from including the same pieces of parts information. Accordingly, a processing load of the slave acquisition information applied to the reader 15A is reducible. Additionally, since an information volume of the slave acquisition information is reducible, the information volume to be transmitted to the reader 15A is reducible.

On the other hand, when the reader 15B executes the judgment process and the organizing process, the information judging unit 157 of the reader 15A (master reader) may be configured not to execute the above overlapping judgment process to the received slave acquisition information. In this arrangement, as long as the respective communication ranges of the readers 15A and 15B reliably do not overlap with each other, the information judging unit 157 of the reader 15A may execute the above overlapping judgment process only to the parts information acquired by the reader 15A from the identification device 30.

Further, at least one of the management server 111 and the communication controller 200 may execute the overlapping judgment process and the organizing process while the reader 15A and the reader 15B do not execute the overlapping judgment process and the organizing process. In the above modification, the parts information management system 100 includes the identification device 30 (30A, 30B, 30C, 30D) provided to the hydraulic excavator 1, the readers 15 (15A, 15B), the communication controller 200 and the management server 111. In this arrangement, the reader 15B transmits the acquired parts information to the reader 15A and the reader 15A transmits the parts information received from the reader 15B and the self-acquired parts information to the communication controller 200. The communication controller 200 may judge whether or not the received parts information includes the pieces of the parts information having the same identification information. When the communication controller 200 judges that the received pieces of the parts information includes the pieces of the parts information having the same identification information, the communication controller 200 may merge the pieces of the parts information having the same identification information and transmit the merged parts information to the management server 111. Alternatively, the management server 111 having received the pieces of the parts information acquired by the readers 15A and 15B via the communication controller 200 may judge whether or not the received parts information includes the parts information having the same identification information. When the management server 111 judges that the received parts information includes the parts information having the same identification information, the management server 111 may merge the pieces of the parts information having the same identification information.

When the reader 15A has a function of the communication controller 200. the reader 15A may directly transmit the parts information to the management server 111.

In the above exemplary embodiment, the pieces of the parts information having the same item number (type information) and the same serial number (unique information) of the target part (e.g. the filter 20) are defined as the same pieces of parts information indicating the same parts information, and the pieces of the parts information having the same item number (type information) and different serial numbers (unique information) for the target part are defined as the parts information of the same type. However, the arrangement of the invention is not limited to the above. Specifically, whether or not the pieces of the parts information have the same contents and whether or not the pieces of the parts information are of the same type may be judged based on other information. For instance, the information unique to the identification device 30 or the IC tag 301 (e.g. the TID) may be used as the unique information. In this case, if the combination of the item number and TID is known for each of the target parts, the target part can be distinguished from the other target parts of the same type based on the combination. Accordingly, the parts information having the same item number and different TID is also usable as the parts information of the same type. Further, the type information is not necessarily the item number but may be the name of the part or the like.

Further, for instance, the parts information having at least one of the same type information (item number) and the same unique information (serial number) may be identified as the same pieces of parts information (same pieces of parts information). In a working vehicle (hydraulic excavator 1), when the identification devices 30 are attached to different parts, different type information is allocated to each of the identification devices 30. Accordingly, for instance, when the readers 15A and 15B hold the identification information having the same type information, it can be judged that the readers 15A and 15B receive the same parts information.

Moreover, the unique information of each of the parts is usually different. Accordingly, when the readers 15A and 15B hold the identification information having the same unique information, it can be judged that the readers 15A and 15B receive the same parts information.

In the exemplary embodiment, the parts information management system 100 includes the hydraulic excavator 1 (working vehicle). However, the arrangement of the invention is not limited to the above. In other words, it is not necessary for the parts information management system of the invention to notify the administrator and the like of the presence of the uncollected replacement part of the working vehicle. For instance, the invention is applicable to a system for managing a part disposed in a shop or a facility. Further, the working vehicle is not necessarily the hydraulic excavator 1 but may be a construction machine such as a wheel loader, bulldozer, motor grader and dump track, or an industrial vehicle such as a forklift.

The invention is suitably applicable to, for instance, a parts information management system for managing a part disposed in a working vehicle.

### EXPLANATION OF CODES

1...hydraulic excavator (working vehicle), 15 (15A,15B)...reader (communication device), 20 (20A,20B,20C)...filter (target part), 30 (30A,30B,30C,30D)...identification device. 100...parts information management system, 110...management center, 111...management server (management apparatus), 120...communication network, 200...communication controller (transmitter), 301...IC tag (identification part), 1111... storage unit, 1112...information acquisition unit, 1117...installation position judgment unit, 1119...information contents judgment unit, 1120...update unit, 1123...notification unit, EG...engine (target part).

## Claims

1. A parts information management system comprising:
an identification device configured to store parts information for identifying a target part to which the identification device is attached;
a communication device configured to acquire the parts information comprised in an electric wave outputted by the identification device and to measure a received strength of the electric wave; and
a management apparatus configured to manage the parts information acquired by the communication device, wherein
the management apparatus comprises:
an installation position judgment unit configured to judge based on the received strength whether or not the target part identified by the parts information associated with the received strength is provided at a predetermined installation position; and
a notification unit configured to output malfunction information when it is judged by the installation position judgment unit that the target part is not provided at the installation position.

2. The parts information management system according to claim 1. wherein
the parts information comprises type information indicating a type of the target part,
the management apparatus comprises a storage unit configured to store pieces of the parts information and the received strength previously acquired and measured by the communication device in association with each other for each of pieces of the type information, and
the installation position judgment unit is configured to judge that the target part is not provided at the installation position when parts information of the same type having the same type information as the acquired parts information acquired by the communication device is stored and a difference between the received strength associated with the acquired parts information and a received strength stored in association with the parts information of the same type exceeds a predetermined value.

3. The parts information management system according to claim 2, further comprising:
an information contents judgment unit configured to judge, when it is judged by the installation position judgment unit that the target part is provided at the installation position, whether, or not contents of the acquired parts information are the same as contents of the parts information of the same type; and
an update unit configured to, when it is judged by the information contents judgment unit that the contents of the acquired parts information are not the same as the contents of the parts information of the same type, store the acquired parts information and the received strength associated with the acquired parts information in the storage unit to update stored contents in the storage unit.

4. The parts information management system according to any one of claims 1 to 3, further comprising:
a working vehicle comprising the identification device, the communication device, and a transmitter configured to associate the parts information with the received strength acquired and measured by the communication device and transmit the parts information associated with the received strengths;
a management center comprising the management apparatus; and
a communication network configured to connect the working vehicle and the management center in a manner capable of wireless communication.

5. A parts information management system comprising:
a working vehicle;
a management apparatus; and
a communication network configured to wirelessly connect the working vehicle and the management apparatus, wherein
the working vehicle comprises:
an identification device comprising at least one identification part attached to target parts of the same type and storing parts information for identifying each of the target parts;
a communication device configured to acquire the parts information comprised in an electric wave outputted by the at least one identification part and to measure a received strength of the electric wave; and
a transmitter configured to transmit acquisition information comprising the parts information and the received strength acquired and measured by the communication device, the parts information comprising type information indicating a type of each of the target parts,
the management apparatus comprises:
an information acquisition unit configured to receive and acquire the acquisition information;
a storage unit configured to store the parts information and the received strength comprised in the acquisition information previously acquired in association with each other for each of the type information;
an installation position judgment unit configured to judge that, when parts information of the same type having the same type information as the acquired parts information comprised in the acquisition information is stored in the storage unit, whether or not the target part identified by the acquired acquisition information is provided at the installation position based on a judgment on whether or not a difference between the received strength associated with the acquired parts information and a received strength stored in association with the parts information of the same type exceeds a predetermined value;
an information contents judgment unit configured to judges, when it is judged by the installation position judgment unit that the difference does not exceed the predetermined value and the target part is provided at the installation position, whether or not contents of the acquired parts information are the same as contents of the parts information of the same type;
an update unit configured to, when it is judged by the information contents judgment unit that the contents of the acquired parts information are not the same as the contents of the parts information of the same type, store the acquired parts information and the received strength associated with the acquired parts information in the storage unit to update stored contents of the storage unit; and
a notification unit configured to output malfunction information when it is judged by the installation position judgment unit that the difference exceeds the predetermined value and the target part is not provided at the installation position.
